(19)

Europäisches
Patentamt
European
Patent Office
Office européen
des brevets

(11) **EP 2 843 892 A1**

(12) **EUROPEAN PATENT APPLICATION**

(43) Date of publication:
04.03.2015 Bulletin 2015/10

(51) Int Cl.:
*H04L 25/03* (2006.01)     *H04L 27/26* (2006.01)

(21) Application number: 13306202.6

(22) Date of filing: 03.09.2013

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Schaich, Frank
70435 Stuttgart (DE)**
• **Wild, Thorsten
70435 Stuttgart (DE)**

(74) Representative: **2SPL Patentanwälte PartG mbB
Postfach 15 17 23
80050 München (DE)**

(54) **Channel dependent subband pulse shaping for multiuser multicarrier signals**

(57)     Embodiments relate to apparatuses, methods and a computer programs for a base station transmitter and for a mobile station transmitter. An apparatus (10) for a base station transmitter (100) comprises a composer module (12), which is operable to compose a multicarrier transmit signal comprising a plurality of subcarriers. The multicarrier transmit signal comprises a first subgroup of subcarriers carrying data of a first receiver and a second subgroup of subcarriers carrying data of a second receiver. The apparatus (10) further comprises a first filter module (14), which is operable to filter the first subgroup of subcarriers using a first filter characteristic to obtain a first transmit component, and a second filter module (16), which is operable to filter the second subgroup of subcarriers using a second filter characteristic, which is different from the first filter characteristic, to obtain a second transmit component. The apparatus (10) further comprises a transmitter module (18) operable to transmit the first and the second transmit components.

A bank of Pulse Shaper (or sidelobe suppression filtering) for Multi-user OFDM transmitters is disclosed. Characteristics of Chebyshev FIR filters are changed based on channel conditions (delay spread, Doppler, timing offset) for each user's signal.

Fig. 1

EP 2 843 892 A1

## Description

Technical Field

Embodiments relate to apparatuses, methods and a computer programs for a base station transmitter and for a mobile station transmitter, and more particularly, but not exclusively to composing differently filtered multicarrier transmit signals.

Background

This section introduces aspects that may be helpful in facilitating a better understanding of the invention(s). Accordingly, the statements of this section are to be read in this light and are not to be understood as admissions about what is in the prior art or what is not in the prior art.

Every few years, wireless cellular communications got renewed. While the move to 2nd Generation (2G) has been technology driven, i.e., the switch to digital signal processing, the switch to 3G (data, internet access) and 4G (video) have been service driven to a high extend. The achievable data rates have grown significantly starting from few kbit/s (beginnings of the Global System for Mobile Communications (GSM)) up to a few hundreds of kbit/s (Enhanced Data rates for GSM Evolution (EDGE)) for 2G. The beginnings of 3G have reached several hundreds of kbit/s increasing up to 42 Mbit/s (at least theoretically) with High-Speed Downlink Packet Access (HSDPA) the newest incarnation of 3G. Actually 4G is rolled out achieving up to a few hundreds of Mbit/s (Long-Term Evolution (LTE)) using multicarrier techniques, with its evolution LTE advanced at the horizon approaching the Gbit/s region.

Multicarrier signal formats offer a large amount of flexibility. This flexibility is very attractive when aiming at a scalable radio frame structure. There is also a natural, physical explanation why multicarrier signal formats are desirable. Wireless propagation channels are Linear and - approximately over the duration of one multicarrier symbol - Time-Invariant (LTI). LTI systems preserve sinusoids as eigenfunctions. Sinusoids are one basic building block of multicarrier modulated signals. This may lead to advantageous properties when it comes to demodulation and equalization.

One significant drawback of multicarrier modulation is the Peak-to-Average Power Ratio (PAPR), but there are methods like Discrete Fourier Transform (DFT) precoding used in conjunction with Orthogonal Frequency Division Multiplexing (OFDM) to build up Single-Carrier Frequency Division Multiplexing (SC-FDMA), out of multicarrier signals, which brings down PAPR.

OFDM is today's dominant multicarrier technology. Its Cyclic Prefix (CP) allows transforming the linear convolution of the channel into a cyclic convolution, thus deals elegantly with multi-path propagation, at the price of additional overhead of the CP, typically ranging from 5-25%. As long as OFDM is used in a fully time- and frequency synchronous manner this may be attractive.

5G systems may bring along new device classes and new traffic types, e.g., driven by the Internet of Things (IoT). Relaxing synchronicity may allow for reducing an overhead for massive numbers of machines. Technologies like Autonomous Timing Advance (ATA) can be used. ATA here means an open-loop timing control approach, where a mobile terminal synchronizes itself on a downlink receive signal, e.g. using pilot symbols and/or synchronization sequences and corrects its timing autonomously, e.g. based on knowledge of supported cell sizes, etc. Additionally, low-end devices may be made cheaper when e.g. oscillator requirements can be relaxed, which are very strict for e.g. LTE. On top, the trend towards higher carrier frequencies, like millimeter waves, causes that the same relative Carrier Frequency Oscillator (CFO) requirements will lead to much larger absolute frequency shifts, phase jitters etc. observed in the baseband processing.

The demand for increased robustness and for relaxation of strict time- and frequency alignments may not go together well with OFDM. In the OFDMA uplink, when devices allocated to neighboring frequencies have timing- and frequency offsets, orthogonality may be lost and Inter-Carrier Interference (ICI) may be generated, reducing the overall system performance. Due to the rectangular-windowed time domain shape of OFDM symbols, the subcarrier spectrum is formed of sinc-functions, which have comparatively high side lobe levels. Only with relatively strict time- and frequency alignments, OFDM can be attractive when the nulls of the spectral subcarrier levels fall together with the maxima of other subcarriers.

Existing multicarrier alternatives to OFDM aim at reduced spectral side-lobe levels, making them more attractive for e.g. uplink FDMA with asynchronous users and operation in fragmented spectrum. Filter-Bank based Multi-Carrier (FBMC) is using additional per-subcarrier pulse-shaping filters, typically with a length of more than one multi-carrier symbol. Those filters provide very strong side-lobe suppression and can be implemented efficiently in poly-phase filter-banks. The CP overhead can be avoided. Due to the long filter lengths, FBMC is best used in conjunction with offset-Quadrature Amplitude Modulation (OQAM) with subsequent symbols overlapping, but being orthogonalized by using real and imaginary part of the symbol alternately. Drawbacks of FBMC may be that - due to OQAM - it may e.g. not be compatible to all kinds of Multiple-Input-Multiple-Output (MIMO). Furthermore, the long filter lengths may make short burst inefficient, due to filter "ramp up" and "ramp down" time. Short bursts will be important for energy-efficient Mobile-Terminating Calls (MTC). Here, another existing multicarrier signal format hooks in: Generalized Frequency Division Multiplexing (GFDM). It is similar to FBMC with subcarrier-wise pulse shaping, but uses methods like tail biting (circular convolution with filters instead of linear convolution) to be attractive for short bursts. Its drawbacks may be overlapping subcarriers and thus usually comparatively complex receivers. Filtered OFDM, thus filtering OFDM over the entire band, may be used to reduce out-of band radiation.

Summary of illustrative Embodiments

Various embodiments provide apparatuses, methods and a computer programs for a base station transmitter and for a mobile station transmitter. Embodiments may allow composing and transmitting user individual multicarrier signals. The multicarrier signal may be individually filtered. For example, at a base station transceiver different filter characteristics may be used for multi-carrier transmit signals for different mobile transceivers. At the mobile transceiver different filter characteristics may be used for transmitting a multi-carrier signal in different radio conditions. Embodiments may allow adapting transmit filter characteristics of a multicarrier signal for different receivers. Embodiments provide an apparatus for a base station transmitter. The apparatus comprises a composer module, which is operable to compose a multicarrier transmit signal comprising a plurality of subcarriers. The multicarrier transmit signal comprises a first subgroup of subcarriers carrying data of a first receiver and a second subgroup of subcarriers carrying data of a second receiver. The apparatus further comprises a first filter module, which is operable to filter the first subgroup of subcarriers using a first filter characteristic to obtain a first transmit component and a second filter module, which operable to filter the second subgroup of subcarriers using a second filter characteristic, which is different from the first filter characteristic, to obtain a second transmit component. The apparatus further comprises a transmitter module operable to transmit the first and the second transmit components.

Embodiments may allow individually adapting time domain filter characteristics for a multicarrier transmit signal for different receivers at a transmitter.

Embodiments provide an apparatus for a mobile transmitter. The apparatus comprises a composer module, which is operable to compose a multicarrier transmit signal comprising a plurality of subcarriers and to generate a time domain signal based on the multicarrier transmit signal. The apparatus comprises a control module operable to determine a filter characteristic from a predefined set of a plurality filter characteristics. The filter characteristic determines a ramp-up slope and a ramp-down slope. The apparatus further comprises a filter module, which is operable to filter the time domain signal using the filter characteristic to obtain a filtered transmit signal. The apparatus further comprises a transmitter module, which is operable to transmit the filtered transmit signal.

Embodiments may enable a mobile transceiver to use different transmit filter characteristics to filter a multicarrier transmit signal and to adapt the transmit filter characteristics to different conditions in the communication network.

In some embodiments of the base station transceiver apparatus the first and second filter characteristics are determined by a first plurality of filter coefficients and a second plurality of filter coefficients. The first plurality of filter coefficients may comprise the same or a different number of coefficients as compared to the second number of filter coefficients. Embodiments may enable to adapt the filter characteristics in a way that resulting filtered transmit signals or transmit symbols for different receivers have the same length, which may further enable efficient transmitter architectures. This may be achieved by having filter characteristics of the same length or by having filter characteristics of different lengths and adapting the input, i.e. also adapting the length of an unfiltered transmit signal or words, accordingly. The first and the second transmit components may correspond to time domain signals of the same duration.

The first filter characteristic may be represented by a first weighting function and the second filter characteristic may be represented by a second weighting function. The first and second weighting functions may comprise ramp-up and ramp-down slopes. The first weighting function may have a steeper ramp-up slope than the second weighting function. Embodiments may enable to adapt a ramp-up slope of the filter characteristic to radio condition or a transmission channel characteristic of the respective receiver, e.g. to a delay spread or a Doppler shift in a radio channel.

In some embodiments the base station transceiver apparatus further comprises a receiver module operable to receive a first receive signal from a first transmitter and a second receive signal from a second transmitter. A control module may be operable to apply a first receive filter characteristic to the first receive signal and a second receive filter characteristic, which is different from the first receive filter characteristic, to the second receive signal. Hence, receiver filter characteristics may be adapted accordingly, the same holds for the mobile transceiver's side. The receiver module may be further operable to receive information related to the first filter characteristic from the first transmitter and information related to the second filter characteristic from the second transmitter. Hence, some embodiments may enable an efficient filter characteristic adaptation using a closed loop approach, in which a receiver, on the base station or mobile side, informs the transmitter on a filter characteristic to apply. The mobile transceiver apparatus may further comprise a receiver module operable to receive information related to the filter characteristic from a receiver of the filtered transmit signal. In some embodiments filter characteristics may be controlled by base station transceivers.

In some embodiments the control module may be operable to provide information related to the filter characteristic to the receiver of the filtered transmit signal using the transmitter module. The filter characteristic may be controlled by a mobile transceiver in some embodiments, which may then inform the base station transceiver on a filter characteristic used.

Embodiments further provide a method for a base station transmitter. The method comprises composing a multicarrier transmit signal comprising a plurality of subcarriers. The multicarrier transmit signal comprises a first subgroup of subcarriers carrying data for a first receiver and a second subgroup of subcarriers carrying data for a second receiver. The method further comprises filtering the first subgroup of subcarriers using a first filter characteristic to obtain a first transmit component and filtering the second subgroup of subcarriers using a second filter characteristic, which is different from the first filter characteristic, to obtain a second transmit component. The method further comprises transmitting the first and the second transmit components.

Embodiments further provide a method for a mobile transmitter. The method comprises composing a multicarrier transmit signal. The multicarrier transmit signal comprises a plurality of subcarriers and generating a time domain signal based on the multicarrier transmit signal. The method further comprises determining a filter characteristic from a predefined set of a plurality filter characteristics. The filter characteristic determines a ramp-up slope and a ramp-down slope. The method comprises filtering the time domain signal using the filter characteristic to obtain a filtered transmit signal and transmitting the filtered transmit signal.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which

Fig. 1 illustrates a block diagram of an embodiment of a base station transmitter apparatus;

Fig. 2 illustrates different filter characteristics in embodiments;

Fig. 3 illustrates different transmit signal characteristics in embodiments;

Fig. 4 illustrates a block diagram of an embodiment of an apparatus for a mobile transmitter;

Fig. 5 illustrates another filter characteristic used in an embodiment;

Fig. 6 illustrates different transmit signal characteristics in an embodiment;

Fig. 7 illustrates a time-frequency view chart with different filter characteristics in an embodiment;

Fig. 8 shows a block diagram of a flow chart of an embodiment of a method for a base station transmitter; and

Fig. 9 shows a block diagram of a flow chart of an embodiment of a method for a mobile transmitter.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a nonexclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following some embodiments of apparatuses, methods and computer programs for base station transmitters/transceivers and mobile transmitters/transceivers will be described. The apparatuses, methods or computer programs in embodiments may be adapted to or configured for a mobile communication system, which may, for example, correspond to one of the 3GPP-standardized mobile communication networks, which may use multi-carrier signals. The term mobile communication system is used synonymously to mobile communication network. The mobile or wireless communication system may correspond to, for example, a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16 or Wireless Local Area Network (WLAN) IEEE 802.11, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

A base station transceiver may be operable to communicate with one or more active mobile transceivers and the base station transceiver may be located in or adjacent to a coverage area of another base station transceiver, e.g. a macro or small cell base station transceiver or a Closed Subscriber Group (CSG) base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3 GPP termino lo gy.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base transceiver Station (BTS), an access point, a transmission point etc., which may be further subdivided in a remote unit and a central unit.

A mobile transceiver can be associated with the base station transceiver or cell. The term cell refers to a coverage area of radio services provided by a base station transceiver, e.g. a NodeB, an eNodeB, a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. CSG and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can be at least partly surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or a gate section at an airport, i.e. its coverage area may have a diameter below 50m. Thus, a base station transceiver may also be referred to as cell.

In embodiments multi-carrier signal formats may be matched for a mix of different users to the respective propagation channel characteristics of each user. This may increase the robustness to delay and Doppler spreads, timing and frequency offsets and spectral efficiency.

In Orthogonal Frequency Division Multiplexing (OFDM) multi-carrier signal formats are used. A Cyclic Prefix (CP) length may be adapted to the delay spread and the OFDM symbol duration, and thus the subcarrier spacing to the expected Doppler shifts of the channel. In a system with multiple access, in which multiple users share radio resources, e.g. in frequency direction such as in OFDMA, a per-user adaptation may be carried out by embodiments. An alignment of OFDM symbols and thus orthogonality may be kept, and inter-carrier and inter-symbol interference may be reduced or avoided. Embodiments may not use a fixed OFDM parameter set, which may be adapted as a compromise for the average situation of all users, but may adapt such a parameter set to individual users. For example, LTE may use one signal format with short CP and one with long CP, but may only use one at a time in a cell and for single frequency networks LTE may use the same CP across all cells. Embodiments may provide flexibility in wireless communication systems.

For arising 5G communication systems, extensions/modifications of OFDM using filter banks may be discussed, which may lead to increased robustness to delay and Doppler spreads, timing and frequency offsets and spectral efficiency. Universal Filtered Multicarrier (UFMC) may use a block-wise filtering across whole sets of subcarriers, e.g. Physical Resource Blocks (PRBs). This may enable robustness against timing and frequency offsets. Embodiments may adapt a waveform or filter characteristic to the channel conditions of each user without destroying the symbol alignment and may thus upkeep identical total multi-carrier symbol durations.

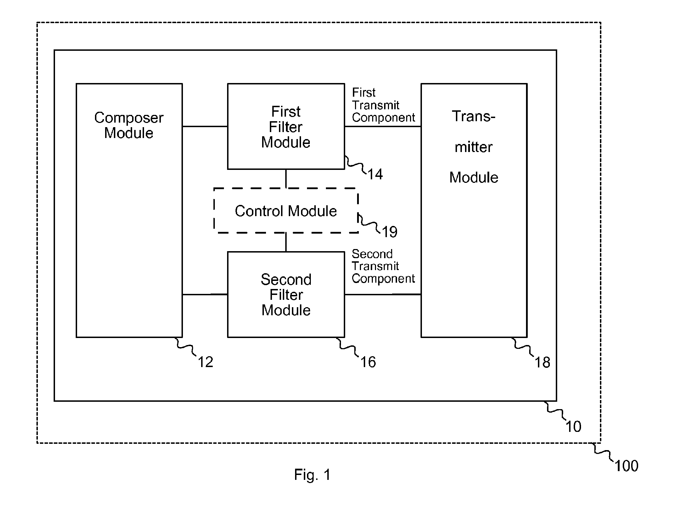

Fig. 1 illustrates an embodiment of an apparatus 10 for a base station transmitter 100. In other words, the apparatus 10 may be adapted to or operable in a base station transmitter 100, transceiver, respectively; it may be operated by or comprised in a base station transmitter 100. Embodiments may also provide a base station transceiver or transmitter 100 comprising the apparatus 10. Fig. 1 further shows an embodiment (dashed lines) of a base station transceiver/transmitter 100 comprising the apparatus 10. The base station transmitter apparatus 10 comprises a composer module 12, which is operable to compose a multicarrier transmit signal comprising a plurality of subcarriers. That is to say that the multicarrier signal comprises orthogonal or non-orthogonal subcarriers, each having a certain sub-bandwidth. The composer module 12 may correspond to one or more composer units, one or more composer devices, or any means for composing. In some embodiments the composer module 12 may be implemented in software, which is executable on accordingly adapted hardware, such as a processor, a Digital Signal Processor (DSP), a multi-purpose processor, or the like. The composer module 12 may determine or receive user data and then compose a transmit signal for subsequent filtering and transmission. For example, the composer module 12 may comprise means for converting a frequency domain signal to the time domain, such as a Fast Fourier Transformation (FFT) module.

The multicarrier transmit signal comprises a first subgroup of subcarriers carrying data for a first receiver and a second subgroup of subcarriers carrying data for a second receiver. The base station transmitter apparatus 10 further comprises a first filter module 14, which is coupled to the composer module 12. The first filter module 14 is operable to filter the first subgroup of subcarriers using a first filter characteristic to obtain a first transmit component. The base station transmitter apparatus 10 further comprises a second filter module 116, which is coupled to the composer module 12. The second filter module 16 is operable to filter the second subgroup of subcarriers using a second filter characteristic, which is different from the first filter characteristic, to obtain a second transmit component.

The first and second filter modules may correspond to one or more filter devices, one or more filter units, or any means for filtering. For example, they may correspond to Finite Impulse Response (FIR) filters and they may be implemented digitally, e.g. by means of software being executed on accordingly adapted hardware, such as a DSP.

The base station transmitter apparatus 10 further comprises a transmitter module 18, which is operable to transmit the first and the second transmit components. The transmitter module 18 may correspond to one or more transmitter devices, one or more transmitter units, or any means for transmitting. The transmitter module 18 may therefore comprise typical transmitter components, such as one or more antennas, filter or filter circuitry, an amplifier such as a Power Amplifier (PA), conversion circuitry for converting a base band signal to a Radio Frequency (RF) signal, a digital/analogue converter, or signal processing capability such as a Digital Signal Processor (DSP).

In some embodiments, all users or receivers may use the same filter lengths, e.g. identical number of samples at the filter input. That is to say that the first and second filter characteristics may be determined by a first plurality of filter coefficients and a second plurality of filter coefficients. The first plurality of filter coefficients may comprise the same number of coefficients as the second number of filter coefficients. The filter parameters or coefficients may vary in order to adapt a receiver's filter characteristic to the channel condition.

In the following embodiments the first and second filter modules 14 and 16 are implemented as FIR filters. The first and the second transmit components correspond to time domain signals of the same duration. The first filter characteristic is represented by a first weighting function and the second filter characteristic is represented by a second weighting function. Furthermore, the first and second weighting functions comprise ramp-up and ramp-down slopes. In some embodiments the first weighting function has a steeper ramp-up slope than the second weighting function as will be detailed subsequently.

Generally, when the power shape of the filter coefficients or weighting function of the FIR filter is closer to a Dirac impulse support of a higher propagation delay spread and/or higher timing offsets may be supported, which may be at the cost of reduced support for high Doppler spreads. When the power shape of the filter coefficients or weighting function of the FIR filter is closer to a rectangular window higher Doppler spreads and/or higher carrier frequency offsets may be supported, which may be at the cost of reduced support for delay spreads and timing offsets.

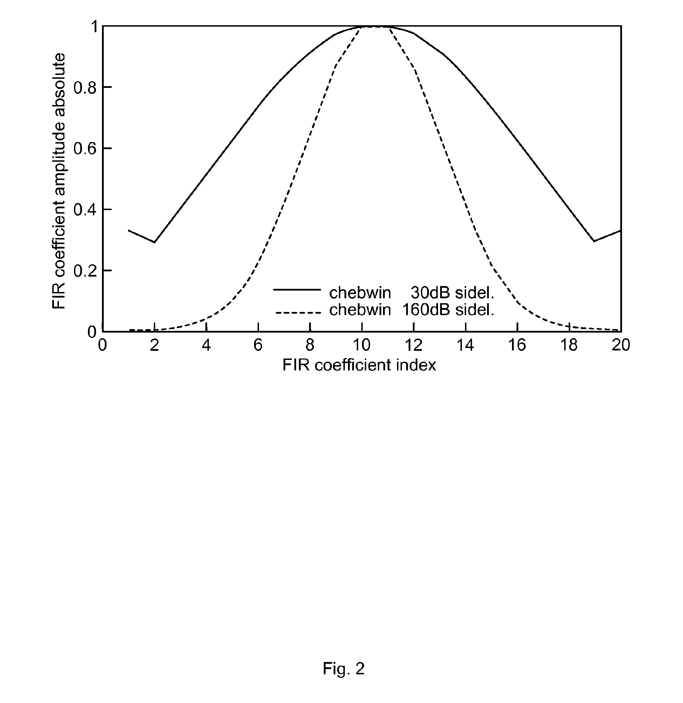

Fig. 2 illustrates different filter characteristics in embodiments. Fig. 2 shows a viewgraph illustrating FIR coefficients (absolute amplitude) versus the FIR coefficient index. In Fig. 2 two examples with the same filter length are shown using Chebyshev-window shaped FIR filters, one with 30dB side lobe suppression (solid line) and one with 160dB side lobe suppression (dashed line). The two filter characteristics have different filter coefficients per user or receiver. In other words, Fig. 2 shows two different exemplified filter shapes, which can e.g. be used for two different users using the same band in different frequencies/PRBs.

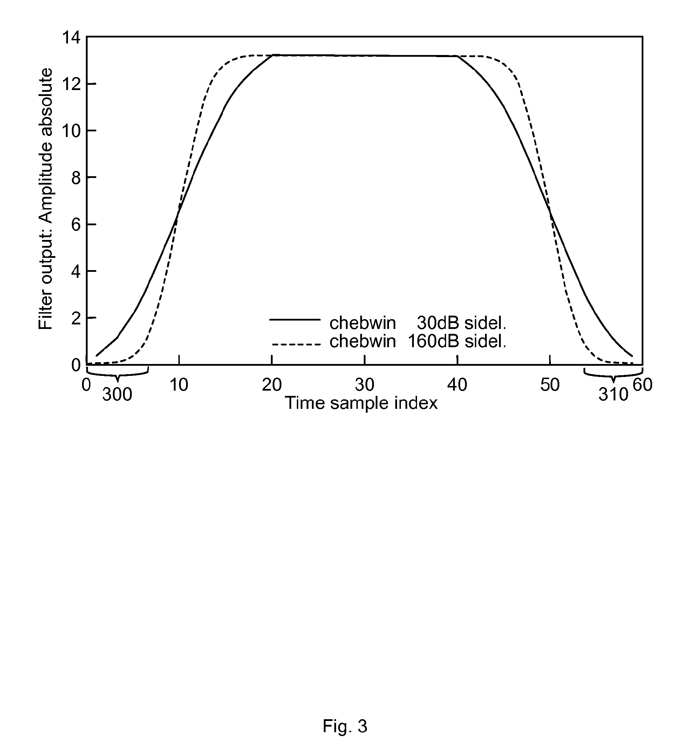

Fig. 3 illustrates different transmit signal characteristics in embodiments. Fig. 3 shows resulting transmit signal amplitudes (first and second transmit components) at the output of the filter modules 14 and 16 over time, when using the filter characteristics as displayed in Fig. 2. One can observe that the user with the dashed curve (160dB side lobe suppression) is more robust to timing offsets and delay spreads. This is due to the longer fade-in and fade-out sections, in which the output amplitudes are close to zero. The fade-in and fade-out sections are illustrated by sections 300 and 310 in Fig. 3. Echoes from a previous symbol may be spread into section 300 without taking significant effects. The last echoes generated by the current symbol in the next symbol may be based on the amplitudes just before section 310 and may therefore consume a larger time period than with the solid line filter (30dB side lobe suppression). A user with the dashed line curve or filter characteristic has a stronger frequency domain side lobe level suppression (160dB), but also has a wider main maximum in the frequency domain. In other words a main frequency lobe of the dashed curve (160dB) spans a wider bandwidth than the main frequency lobe of the solid line curve (30dB). The solid line characteristic (30dB) may thus be more robust e.g. to Doppler spreads. In this embodiment a per-user adaptation of filter coefficients to the channel conditions may be enabled.

In some embodiments the base station transmitter apparatus 10 may further comprise a control module 19, which is operable to control the first and the second filter characteristics of the first and second filter modules 14 and 16. The control module 19 may correspond to one or more control units, one or more control devices, or any means for controlling. In some embodiments the control module 19 may be implemented in software, which is executable on accordingly adapted hardware, such as a processor, a Digital Signal Processor (DSP), a multi-purpose processor, or the like.

The control module 19 may be coupled to the first and second filter modules 14 and 16 and is illustrated in Fig. 1 as optional component (dashed lines) of the base station transmitter apparatus 10.

The control module 19 may be operable to obtain information related to transmission channel properties of the transmission channel between the base station transmitter 100 and the first receiver and between the base station transmitter 100 and the second receiver. Such information may correspond to any information on, for example, a delay spread, a Doppler shift, an attenuation, an interference or noise condition, a channel quality, a reception power, etc. The control module 19 may be further operable to control the first and the second filter characteristics of the first and second filter modules 14 and 16 based on the information related to the transmission channels. For example, the control module 19 may be operable to select the filter characteristic with 30dB side lobe suppression (and narrower frequency main lobe) as depicted in Fig. 2 for a user with a higher Doppler spread and the filter characteristic with 160dB side lobe suppression (and wider frequency main lobe) for a user with a lower Doppler spread. For example, the control module 19 may be operable to select the filter characteristic with 160dB side lobe suppression as depicted in Fig. 2 for a user with a higher delay spread and the filter characteristic with 30dB side lobe suppression for a user with a lower delay spread.

Moreover, the users may be scheduled in parallel in an FDMA manner. The filtering may keep inter-carrier interference low so that the users are still near-orthogonal. The subcarrier spacing may remain unchanged for different users.

In further embodiments the control module 19 may be operable to select the first and second filter characteristics from a predefined set of two or more filter characteristics. The control module 19 may be operable to provide information related to the selected filter characteristic to the first and second receivers. In other words, a filter characteristic for a mobile transceiver may be selected at the base station 100 and information related to the selected filter characteristic may then be provided to the mobile transceiver.

Moreover, in some embodiments the base station transmitter apparatus 10 may further comprise a receiver module operable to receive a first receive signal from a first transmitter and a second receive signal from a second transmitter. The receiver module may correspond to one or more receiver devices, one or more receiver units, or any means for receiving. The receiver module may therefore comprise typical receiver components, such as one or more antennas, filter or filter circuitry, an amplifier such as a Low Noise Amplifier (LNA), conversion circuitry for converting an RF signal to a base band signal, an analog/digital converter, or signal processing capability such as a Digital Signal Processor (DSP). The control module 19 may be further coupled to the receiver module and the control module 19 may be operable to apply a first receive filter characteristic to the first receive signal and a second receive filter characteristic, which is different from the first receive filter characteristic, to the second receive signal. In other words, embodiments may use user specific transmit/receive filtering in the uplink and in the downlink direction. The receiver module may further comprise accordingly adapted receive filter modules.

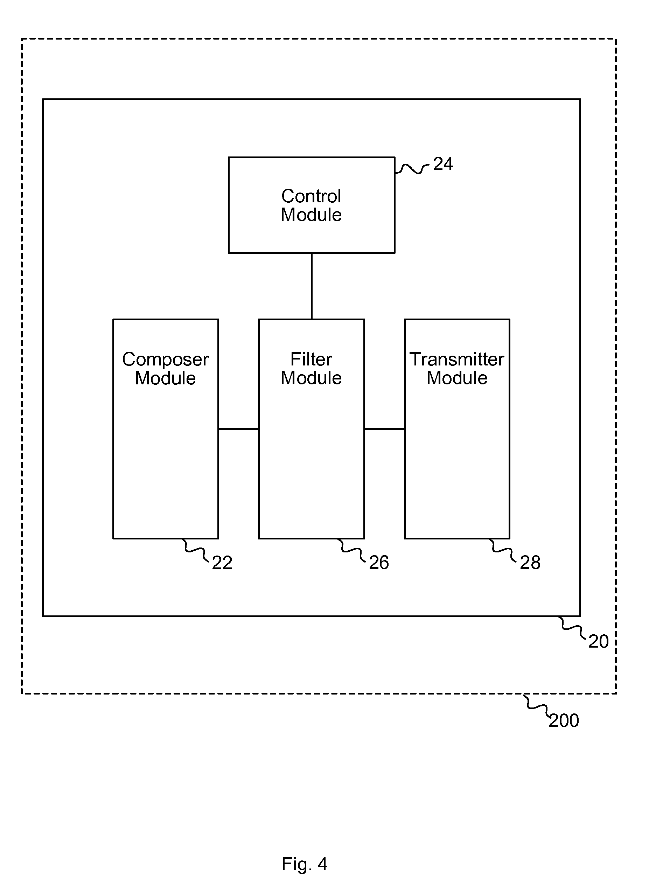

Consequently, embodiments also provide an apparatus 20 for a mobile transmitter 200. Fig. 4 illustrates a block diagram of an embodiment of an apparatus 20 for a mobile transmitter 200. In other words, the apparatus 20 may be adapted to or operable in a mobile transmitter 200, transceiver, respectively; it may be operated by or comprised in a mobile transmitter 200. Embodiments may also provide a mobile transceiver or transmitter 200 comprising the apparatus 20. Fig. 4 further shows an embodiment (dashed lines) of a mobile transceiver/transmitter 200 comprising the apparatus 20. The mobile transmitter apparatus 20 comprises a composer module 22, which is operable to compose a multicarrier transmit signal comprising a plurality of subcarriers and to generate a time domain signal based on the multicarrier transmit signal. With respect to the implementation options of the composer module 22 it is referred to the details of composer module 12 as described above. The mobile transmitter apparatus 20 further comprises a control module 24, which is operable to determine a filter characteristic from a predefined set of a plurality filter characteristics. The filter characteristic determines a ramp-up slope and a ramp-down slope. With respect to the implementation options of the control module 24 it is referred to the details of the control module 19 as described above. The mobile transmitter apparatus 20 further comprises a filter module 26, which is coupled to the control module 24, and which is operable to filter the time domain signal using the filter characteristic to obtain a filtered transmit signal. The filter module 26 is further coupled to a transmitter module 28, which is operable to transmit the filtered transmit signal. With respect to the implementation options of the filter module 26 and the transmitter module 28 it is referred to the details of filter modules 14, 16 and transmitter module 18 as described above.

In line with what was described above, the mobile transmitter apparatus 20 may further comprise a receiver module, cf. the above described receiver module for implementation details, which is operable to receive information related to the filter characteristic from a receiver of the filtered transmit signal. That is to say, in some embodiments the mobile transceiver may receive information on the filter characteristic, which is to be applied, from a base station transmitter 100. On the base station transmitter 100 side the control module 19 may further be operable to provide information related to the first filter characteristic to the first transmitter or mobile transceiver using the transmitter module 18, or the control module 19 may be further operable to provide information related to the second filter characteristic to the second transmitter or mobile transceiver using the transmitter module 18. In some embodiments the base station transceiver 100 may select filter characteristics (for uplink or downlink) for the mobile transceivers and may then provide information on the individual filter characteristics to the mobile transceivers.

In other embodiments the mobile transceivers may select a filter characteristic (uplink or downlink) and then inform the base station transceiver. On the mobile transmitter 200 side, the control module 24 may be operable to provide information related to the filter characteristic to the receiver of the filtered transmit signal using the transmitter module 28. On the base station transceiver side, the receiver module may be further operable to receive information related to the first filter characteristic from the first transmitter and information related to the second filter characteristic from the second transmitter.

In further embodiments all users may use the same total multi-carrier symbol duration but varying filter lengths and number of samples at the filter input. In other words, the first and second filter characteristics may be determined by a first plurality of filter coefficients and a second plurality of filter coefficients. The first plurality of filter coefficients may comprise a different number of coefficients than the second number of filter coefficients. The effect may be similar to the one described above but it may offer even more degrees of adaptation at the cost of the increased complexity of a transceiver architecture, which may deal with different filter lengths per user.

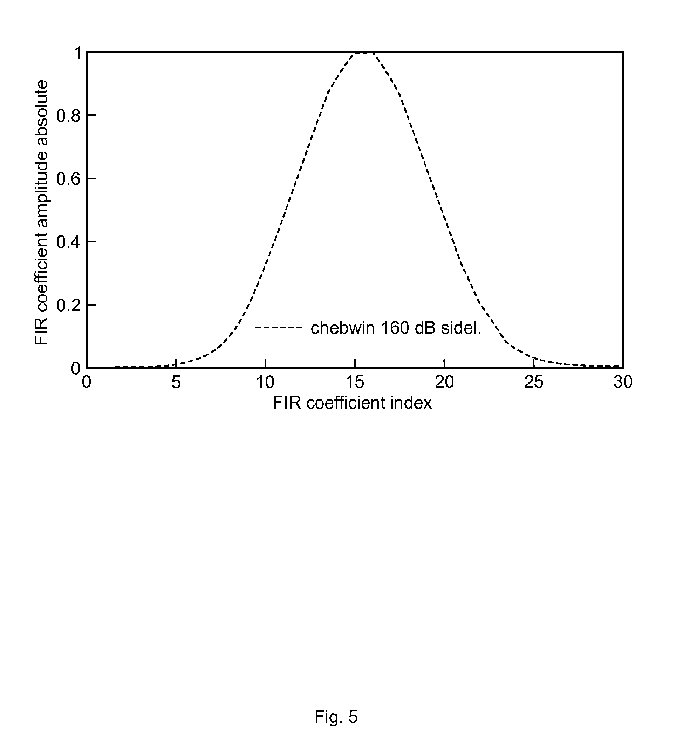

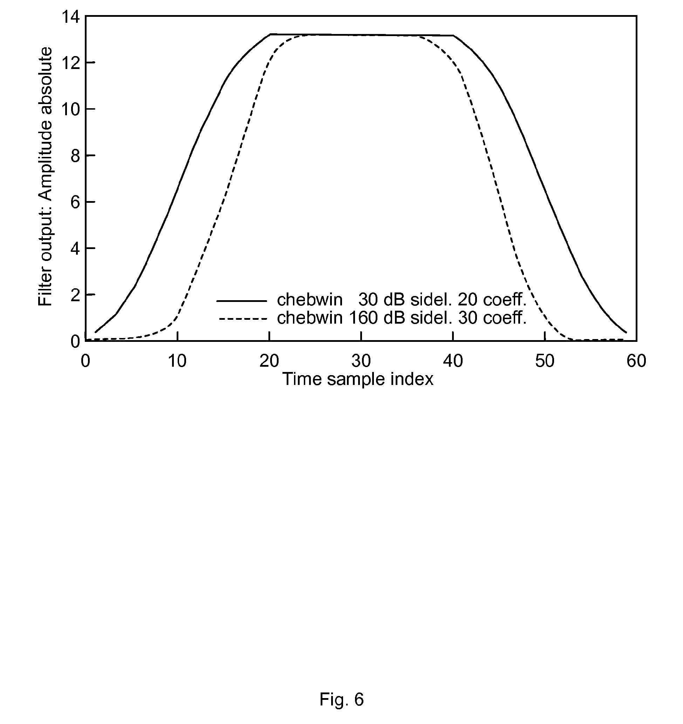

An example of another filter characteristic, which may be used in embodiments, is depicted in Fig. 5. Fig. 5 illustrates FIR coefficients amplitudes (absolute) versus an FIR coefficient index and shows an example for the same total multicarrier duration but different filter lengths. Fig. 5 shows an additional Chebyshev filter (160dB side lobe suppression) with length of 30 coefficients instead of 20 coefficients as before in Fig. 2. Fig. 6 illustrates the different transmit signal characteristics in an embodiment. A user with the filter shape of Fig. 5 (160dB, 30 coefficients) may modify its number of samples at the filter input from 40 down to 30 in order to achieve the same multi-carrier symbol duration (of 59 samples in this example) as the solid line user from Figs. 2 and 3 (30dB). In contrast to Fig. 2 a stronger temporal isolation of subsequent multi-carrier symbols may result, which may lead to additionally increased robustness against higher delay spreads or timing offsets.

With the decreasing number of input samples, the number of sub-carriers may also decrease. The first subgroup of subcarriers (for the first receiver/user) may comprise a different number of subcarriers than the second group of subcarriers (for the second receiver/user). Moreover, the first subgroup of subcarriers may comprise a different spacing of subcarriers than the second group of subcarriers. Furthermore, the first subgroup of subcarriers may carry a different amount of data than the second group of subcarriers. Differing to the embodiments exemplified in Fig. 2 and 3, in the present embodiment also the subcarrier spacing per user changes. While for strict OFDM systems, this would affect orthogonality and could cause large inter-carrier interference, in filtered multi-carrier systems as in the present embodiment, due to the filtering, this may not be a problem, as the side lobe levels of the subcarriers may be much lower than in strict OFDM (sinc-based side lobes) and thus inter-carrier interference may become negligible.

In embodiments, the capability of changing the subcarrier spacing may allow improving a spectral efficiency. For example, in Line-Of-Sight (LOS)-channels with well performing time-frequency synchronization, the filters or their length may be very short. Short filters may increase the useful symbol part and thus the subcarrier spacing, they may allow more data symbols to be transmitted at the same time compared to a multi-carrier system with longer filters.

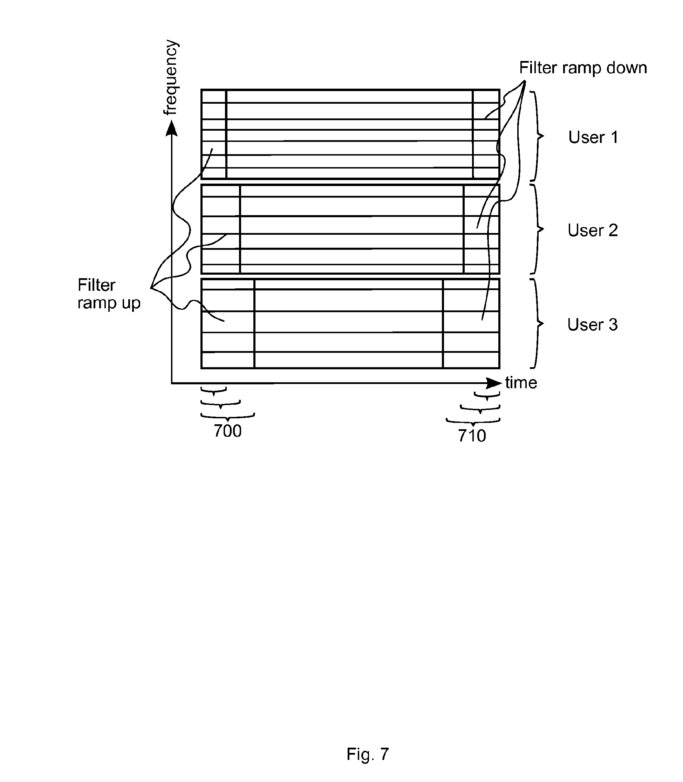

Fig. 7 illustrates a time frequency view chart with different filter characteristics in an embodiment. Fig. 7 shows a time-frequency plane where three users, user 1, user 2 and user 3 use different sub-groups of subcarries in different sub-bands. In other words, each of the three users uses a sub-band from a system bandwidth. Within each sub-band there are multiple sub-carriers. The number of sub-carriers in each sub-band as well as the spacing among the subcarriers in the sub-band is different. Fig. 7 further depicts different filter characteristics used for the different users along the time axis. Filter ramp-up sections 700 and filter ramp-down sections 710 are shown at the beginning and the end of each user's transmission. As shown in Fig. 7 the durations of the respective ramp-up and ramp-down times are shortest for user 1 with the highest number of sub-carriers, second shortest for user 2 with the second highest number of sub-carriers, and longest for user 3 with the lowest number of sub-carriers. Each of the three different frequency-parallel users has adapted its waveform using different filter parameters.

A mathematical description of the transmitted complex-valued time domain signal vector in block-wise filtered UFMC in an embodiment can be given by

$$\mathbf{x} = \sum_{i=1}^{p} \mathbf{F}_i \mathbf{V}_i \mathbf{d}_i .$$

Here $p$ Physical Resource Blocks (PRBs) are used. The complex-valued UFMC modulator input data symbol vector (e.g. QAM symbols) $d$ is mapped onto "sinusoidal" subcarriers by the complex-valued matrix $\mathbf{V}$, e.g. applying an Inverse Discrete Fourier Transform (IDFT). Each resource block is filtered by Toeplitz-matrix $\mathbf{F}$ containing a band pass FIR filter.

Note that the envisaged filter lengths of UFMC are typically in the order of the OFDM-cyclic prefix (in contrast to FBMC), as the filtering for an entire block of sub-carriers may allow wider pass-band ranges than a per-subcarrier filtering in some embodiments. The cross-talk between frequency neighbored PRBs may be small due to filtering and may become almost zero for second-neighbor PRBs. The adaptation to channel characteristics means that each user adapts the filter matrix $\mathbf{F}_i$ taylored to its own conditions as described below.

In first embodiments just the filter parameters change, meaning that the dimension of the matrices $\mathbf{F}_i$, $\mathbf{V}_i$, and the vector $\mathbf{d}_i$ are identical for all users. In second embodiments the filter length changes also, which causes different subcarrier spacing and thus also different dimensions of $\mathbf{V}_i$ and $\mathbf{d}_i$ per user.

In an embodiment during an initial connection, a mobile station may enter a network, after a long period of inactivity, respectively, transmissions may occur using a generic compromise filter selection, e.g. similar to choice of OFDM CP length and subcarrier spacing. After a certain time for evaluating the channel, further described below, the base station, a mobile station, respectively, may decide to select a different waveform for the user.

While in Frequency Division Duplexing (FDD) systems the fast fading in uplink and downlink is different, the statistical properties of the channel impulse responses are usually very similar between uplink and downlink with duplexing distances used in existing systems like LTE. Thus, the measurements for determining the statistical channel properties may take place at both ends of the link.

For minimizing or reducing the signaling overhead, some embodiments may carry out the necessary channel estimation tasks at the base station, as it may have more processing power and may usually be in charge of deciding which waveform to choose. In case the mobile transceiver performs the channel evaluation, it may signal information related to a result of the channel evaluation to the base station. A desired waveform may now be indicated by the base station.

In further embodiments contention-based access sporadic transmission with a large number of devices may be used. The system may allow a mobile transceiver choosing its waveform itself in order to minimize overhead, e.g. from a fixed set of candidate waveforms or a predefined set of a plurality filter characteristics. The base station transceiver apparatus 10 may then be operable to detect the chosen waveform. In other embodiments a "first waveform indication information" may be signaled with generic waveform parameters from the mobile transceiver apparatus 20 to the base station transmitter 100 as used in the initial connection.

In line with the above embodiments decisions on a choice of waveform may be based on radio channel conditions. Longer filter lengths may be desirable or selected in the following cases:

- Higher delay spreads (for protection against Inter Symbol Interference (ISI))

- Higher Doppler spreads (for protection against inter-carrier interference)

- Relaxed synchronization requirements in time and frequency (causing time and frequency offsets)

In case those impairments are not present or not significant, shorter filter lengths may be preferable, decreasing the subcarrier spacing in the frequency direction and thus allowing more data symbols to be transmitted within a given piece of spectrum.

The decision may be based on an expected data throughput within the system, which may be a function of an expected SINR per subcarrier. For example, Mutual Information based Effective SINR Mapping (MIESM) may be carried out in order to estimate a block error probability for particular modulation and coding schemes and thus the expected throughput. In case of channel conditions, in which inter-symbol and inter-carrier interference is expected between users, embodiments may avoid mixing extreme filter parameter differences for frequency-neighbored users. Extreme differences could e.g. also be handled by resolution in time direction, using different multicarrier symbols. Embodiments may provide means to adapt the signal format / waveform of each user individually to the propagation channel characteristics. The per-user adaptation may bring a high flexibility for increased robustness of impairments expected in 5G cellular systems, e.g. a better support of asynchronous users or a relaxed requirement of synchronicity in time and frequency, which may also increase the support for low-end Massive Machine type Communication (MMC) devices. Additionally, spectral efficiency may be improved by e.g. optimizing the subcarrier spacing.

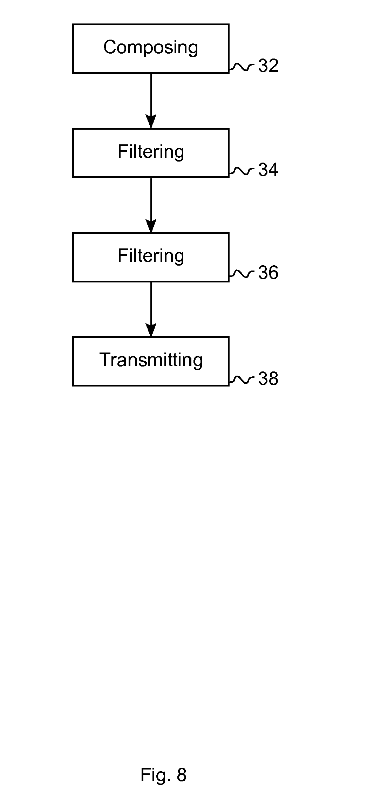

Fig. 8 shows a block diagram of a flow chart of an embodiment of a method for a base station transmitter 100. The method comprises composing 32 a multicarrier transmit signal comprising a plurality of subcarriers. The multicarrier transmit signal comprises a first subgroup of subcarriers carrying data for a first receiver and a second subgroup of subcarriers carrying data for a second receiver. The method further comprises filtering 34 the first subgroup of subcarriers using a first filter characteristic to obtain a first transmit component, and filtering 36 the second subgroup of subcarriers using a second filter characteristic, which is different from the first filter characteristic, to obtain a second transmit component. The method further comprises transmitting 38 the first and the second transmit components.

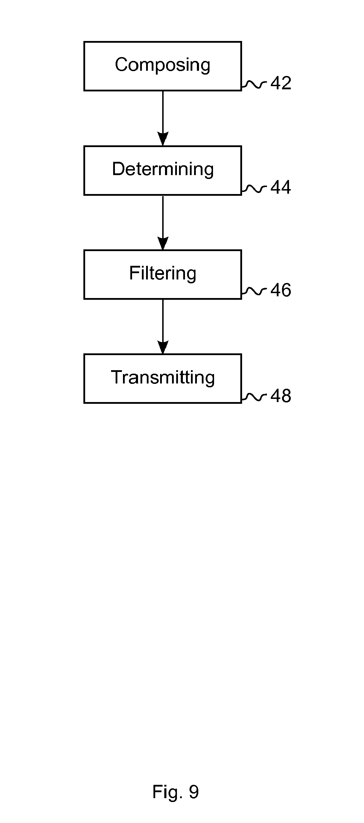

Fig. 9 shows a block diagram of a flow chart of an embodiment of a method for a mobile transmitter 200. The method comprises composing 42 a multicarrier transmit signal comprising a plurality of subcarriers and generating a time domain signal based on the multicarrier transmit signal. The method further comprises determining 44 a filter characteristic from a predefined set of a plurality filter characteristics. The filter characteristic determines a ramp-up slope and a ramp-down slope. The method further comprises filtering 46 the time domain signal using the filter characteristic to obtain a filtered transmit signal and transmitting 48 the filtered transmit signal.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for composing", "means for converting", "means for filtering", "means for controlling", "means for transmitting", etc., may be provided through the use of dedicated hardware, such as "a composer", "a converter", "a filter", "a controller", "a transmitter", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1. An apparatus (10) for a base station transmitter (100), the apparatus (10) comprising
   a composer module (12) operable to compose a multicarrier transmit signal comprising a plurality of subcarriers, the multicarrier transmit signal comprises a first subgroup of subcarriers carrying data of a first receiver and a second subgroup of subcarriers carrying data of a second receiver;
   a first filter module (14) operable to filter the first subgroup of subcarriers using a first filter characteristic to obtain a first transmit component;
   a second filter module (16) operable to filter the second subgroup of subcarriers using a second filter characteristic, which is different from the first filter characteristic, to obtain a second transmit component; and
   a transmitter module (18) operable to transmit the first and the second transmit components.

2. The apparatus (10) of claim 1, wherein the first and second filter characteristics are determined by a first plurality of filter coefficients and a second plurality of filter coefficients, and wherein the first plurality of filter coefficients comprises the same number of coefficients as the second number of filter coefficients.

3. The apparatus (10) of claim 1, wherein the first and second filter characteristics are determined by a first plurality of filter coefficients and a second plurality of filter coefficients, and wherein the first plurality of filter coefficients comprises a different number of coefficients than the second number of filter coefficients.

4. The apparatus (10) of claim 1, wherein the first subgroup of subcarriers comprises a different number of subcarriers than the second group of subcarriers, wherein the first subgroup of subcarriers comprises a different spacing of subcarriers than the second group of subcarriers, or wherein the first subgroup of subcarriers carries a different amount of data than the second group of subcarriers.

5. The apparatus (10) of claim 1, wherein the first and the second transmit components correspond to time domain signals of the same duration, or wherein the first filter characteristic is represented by a first weighting function and wherein the second filter characteristic is represented by a second weighting function, wherein the first and second weighting functions comprise ramp-up and ramp-down slopes, wherein the first weighting function has a steeper ramp-up slope than the second weighting function.

6. The apparatus (10) of claim 1, further comprising a control module (19) operable to control the first and the second filter characteristics of the first and second filter modules (14; 16), wherein the control module (19) is operable to obtain information related to transmission channel properties of the transmission channel between the base station transmitter (100) and the first receiver, and between the base station transmitter (100) and the second receiver, and wherein the control module (19) is further operable to control the first and the second filter characteristics of the first and second filter modules (14; 16) based on the information related to the transmission channels.

7. The apparatus (10) of claim 6, wherein the control module is operable to select the first and second filter characteristics from a predefined set of two or more filter characteristics, and wherein the control module is operable to provide information related to the selected filter characteristic to the first and second receivers.

8. The apparatus (10) of claim 1, further comprising a receiver module operable to receive a first receive signal from a first transmitter and a second receive signal from a second transmitter, and wherein the control module (19) is operable to apply a first receive filter characteristic to the first receive signal and a second receive filter characteristic, which is different from the first receive filter characteristic, to the second receive signal.

9. The apparatus (10) of claim 8, wherein the receiver module is further operable to receive information related to the first filter characteristic from the first transmitter and information related to the second filter characteristic from the second transmitter.

10. The apparatus (10) of claim 1, wherein the control module (19) is further operable to provide information related to the first filter characteristic to the first transmitter using the transmitter module (18), or wherein the control module (19) is further operable to provide information related to the second filter characteristic to the second transmitter using the transmitter module (18).

11. An apparatus (20) for a mobile transmitter (200), the apparatus (20) comprising
a composer module (22) operable to compose a multicarrier transmit signal comprising a plurality of subcarriers and to generate a time domain signal based on the multicarrier transmit signal;
a control module (24) operable to determine a filter characteristic from a predefined set of a plurality filter characteristics, the filter characteristic determining a ramp-up slope and a ramp-down slope;
a filter module (26) operable to filter the time domain signal using the filter characteristic to obtain a filtered transmit signal; and
a transmitter module (28) operable to transmit the filtered transmit signal.

12. The apparatus (20) of claim 13, further comprising a receiver module operable to receive information related to the filter characteristic from a receiver of the filtered transmit signal or wherein the control module is operable to provide information related to the filter characteristic to the receiver of the filtered transmit signal using the transmitter module.

13. A method for a base station transmitter (100), the method comprising
composing (32) a multicarrier transmit signal comprising a plurality of subcarriers, the multicarrier transmit signal comprises a first subgroup of subcarriers carrying data for a first receiver and a second subgroup of subcarriers carrying data for a second receiver;
filtering (34) the first subgroup of subcarriers using a first filter characteristic to obtain a first transmit component;
filtering (36) the second subgroup of subcarriers using a second filter characteristic, which is different from the first filter characteristic, to obtain a second transmit component; and
transmitting (38) the first and the second transmit components.

14. A method for a mobile transmitter (200), the method comprising
composing (42) a multicarrier transmit signal comprising a plurality of subcarriers and generating a time domain signal based on the multicarrier transmit signal;
determining (44) a filter characteristic from a predefined set of a plurality filter characteristics, the filter characteristic determining a ramp-up slope and a ramp-down slope;

filtering (46) the time domain signal using the filter characteristic to obtain a filtered transmit signal; and transmitting (48) the filtered transmit signal.

15. A computer program having a program code for performing at least one of the methods of claims 13 or 14, when the computer program is executed on a computer, processor, or programmable hardware component.

**Amended claims in accordance with Rule 137(2) EPC.**

1. An apparatus (10) for a base station transmitter (100) of a mobile communication system, the apparatus (10) comprising
a composer module (12) operable to compose a universal multicarrier transmit signal comprising a plurality of subcarriers, the universal multicarrier transmit signal comprises a first subgroup of subcarriers carrying data of a first receiver and a second subgroup of subcarriers carrying data of a second receiver;
a first filter module (14) operable to filter the first subgroup of subcarriers using a first filter characteristic to obtain a power shaped first transmit component;
a second filter module (16) operable to filter the second subgroup of subcarriers using a second filter characteristic, which is different from the first filter characteristic, to obtain a power shaped second transmit component; and
a transmitter module (18) operable to transmit the power shaped first and the power shaped second transmit components.

2. The apparatus (10) of claim 1, wherein the first and second filter characteristics are determined by a first plurality of filter coefficients and a second plurality of filter coefficients, and wherein the first plurality of filter coefficients comprises the same number of coefficients as the second number of filter coefficients.

3. The apparatus (10) of claim 1, wherein the first and second filter characteristics are determined by a first plurality of filter coefficients and a second plurality of filter coefficients, and wherein the first plurality of filter coefficients comprises a different number of coefficients than the second number of filter coefficients.

4. The apparatus (10) of claim 1, wherein the first subgroup of subcarriers comprises a different number of subcarriers than the second group of subcarriers, wherein the first subgroup of subcarriers comprises a different spacing of subcarriers than the second group of subcarriers.

5. The apparatus (10) of claim 1, wherein the first and the second transmit components correspond to time domain signals of the same duration, or wherein the first filter characteristic is represented by a first weighting function and wherein the second filter characteristic is represented by a second weighting function, wherein the first and second weighting functions comprise ramp-up and ramp-down slopes, wherein the first weighting function has a steeper ramp-up slope than the second weighting function.

6. The apparatus (10) of claim 1, further comprising a control module (19) operable to control the first and the second filter characteristics of the first and second filter modules (14; 16), wherein the control module (19) is operable to obtain information related to transmission channel properties of the transmission channel between the base station transmitter (100) and the first receiver, and between the base station transmitter (100) and the second receiver, and wherein the control module (19) is further operable to control the first and the second filter characteristics of the first and second filter modules (14; 16) based on the information related to the transmission channels.

7. The apparatus (10) of claim 6, wherein the control module is operable to select the first and second filter characteristics from a predefined set of two or more filter characteristics, and wherein the control module is operable to provide information related to the selected filter characteristic to the first and second receivers.

8. The apparatus (10) of claim 1, further comprising a receiver module operable to receive a first receive signal from a first transmitter and a second receive signal from a second transmitter, and wherein the control module (19) is operable to apply a first receive filter characteristic to the first receive signal and a second receive filter characteristic, which is different from the first receive filter characteristic, to the second receive signal.

9. The apparatus (10) of claim 8, wherein the receiver module is further operable to receive information related to the first filter characteristic from the first transmitter and information related to the second filter characteristic from the second transmitter.

10. The apparatus (10) of claim 1, wherein the control module (19) is further operable to provide information related to the first filter characteristic to the first transmitter using the transmitter module (18), or wherein the control module (19) is further operable to provide information related to the second filter characteristic to the second transmitter using the transmitter module (18).

**11.** An apparatus (20) for a mobile transmitter (200) of a mobile communication system, the apparatus (20) comprising

a composer module (22) operable to compose a universal multicarrier transmit signal comprising a plurality of subcarriers and to generate a time domain signal based on the multicarrier transmit signal;

a control module (24) operable to determine a filter characteristic from a predefined set of a plurality filter characteristics, the filter characteristic determining a ramp-up slope and a ramp-down slope;

a filter module (26) operable to filter the time domain signal using the filter characteristic to obtain a power shaped filtered transmit signal; and

a transmitter module (28) operable to transmit the power shaped filtered transmit signal.

**12.** The apparatus (20) of claim 13, further comprising a receiver module operable to receive information related to the filter characteristic from a receiver of the filtered transmit signal or wherein the control module is operable to provide information related to the filter characteristic to the receiver of the filtered transmit signal using the transmitter module.

**13.** A method for a base station transmitter (100) of a mobile communication system, the method comprising

composing (32) a universal multicarrier transmit signal comprising a plurality of subcarriers, the universal multicarrier transmit signal comprises a first subgroup of subcarriers carrying data for a first receiver and a second subgroup of subcarriers carrying data for a second receiver;

filtering (34) the first subgroup of subcarriers using a first filter characteristic to obtain a power shaped first transmit component;

filtering (36) the second subgroup of subcarriers using a second filter characteristic, which is different from the first filter characteristic, to obtain a power shaped second transmit component; and

transmitting (38) the power shaped first and the power shaped second transmit components.

**14.** A method for a mobile transmitter (200) of a mobile communication system, the method comprising

composing (42) a universal multicarrier transmit signal comprising a plurality of subcarriers and generating a time domain signal based on the multicarrier transmit signal;

determining (44) a filter characteristic from a predefined set of a plurality filter characteristics, the filter characteristic determining a ramp-up slope and a ramp-down slope;

filtering (46) the time domain signal using the filter characteristic to obtain a power shaped filtered transmit signal; and

transmitting (48) the power shaped filtered transmit signal.

**15.** A computer program having a program code for performing at least one of the methods of claims 13 or 14, when the computer program is executed on a computer, processor, or programmable hardware component.

Fig. 1

Fig. 2

Fig. 3

Fig. 4

Fig. 5

Fig. 6

Fig. 7

Fig. 8

```
┌─────────────────┐
│   Composing     │
└─────────────────┘  ∿ 42
         │
         ▼
┌─────────────────┐
│   Determining   │
└─────────────────┘  ∿ 44
         │
         ▼
┌─────────────────┐
│    Filtering    │
└─────────────────┘  ∿ 46
         │
         ▼
┌─────────────────┐
│  Transmitting   │
└─────────────────┘  ∿ 48
```

Fig. 9

Europäisches
Patentamt

European
Patent Office

Office européen
des brevets

# EUROPEAN SEARCH REPORT

**Application Number**

EP 13 30 6202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 603 295 A2 (SAMSUNG ELECTRONICS CO LTD [KR]; POSTECH FOUNDATION [KR]) 7 December 2005 (2005-12-07) * paragraphs [0007], [0009]; figure 1 * * paragraph [0011] - paragraph [0013] * * paragraph [0020] - paragraph [0027]; figures 3,4 * | 1-4,8-15 | INV. H04L25/03 H04L27/26 |
| X | TRIGUI I ET AL: "Optimized pulse shaping for OFDM multi-user communications over doubly dispersive channels", SIGNAL PROCESSING AND ITS APPLICATIONS, 2007. ISSPA 2007. 9TH INTERNATIONAL SYMPOSIUM ON, IEEE, PISCATAWAY, NJ, USA, 12 February 2007 (2007-02-12), pages 1-4, XP031280552, ISBN: 978-1-4244-0778-1 * Section II., III., IV. and V. * * figure 2 * | 1-4,6-8, 11-15 | |
| X | SALVATORE D'ALESSANDRO ET AL: "Adaptive pulse-shaped OFDM with application to in-home power line communications", TELECOMMUNICATION SYSTEMS ; MODELING, ANALYSIS, DESIGN AND MANAGEMENT, KLUWER ACADEMIC PUBLISHERS, BO, vol. 51, no. 1, 20 January 2011 (2011-01-20), pages 3-13, XP035142298, ISSN: 1572-9451, DOI: 10.1007/S11235-010-9410-3 * Sections 2., 3. and 4. * | 1-5,8, 11-15 | TECHNICAL FIELDS SEARCHED (IPC) H04L |

-/--

The present search report has been drawn up for all claims

| Place of search | Date of completion of the search | Examiner |
|---|---|---|
| Berlin | 20 January 2014 | Chave, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 30 6202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZOU H ET AL: "Multiuser OFDMA Resource Allocation Algorithms for In-Home Power-Line Communications", GLOBAL TELECOMMUNICATIONS CONFERENCE, 2008. IEEE GLOBECOM 2008. IEEE, IEEE, PISCATAWAY, NJ, USA, 30 November 2008 (2008-11-30), pages 1-5, XP031370240, ISBN: 978-1-4244-2324-8 * Sections I. and II. * ----- | 1,11, 13-15 | |
| X | WO 2012/168926 A2 (TECHNION R & D FOUNDATION [IL]; NAZARATHY MOSHE [IL]; TOLMACHEV ALEX []) 13 December 2012 (2012-12-13) * paragraph [0135] - paragraph [0137] * * figures 7A-7D * * paragraph [0189] - paragraph [0191] * ----- | 1-4, 11-15 | |
| X | TONELLO A M ET AL: "Synchronization for an efficient multiuser filtered multitone receiver", WIRELESS DAYS, 2008. WD '08. 1ST IFIP, IEEE, PISCATAWAY, NJ, USA, 24 November 2008 (2008-11-24), pages 1-5, XP031448095, ISBN: 978-1-4244-2828-1 * Sections I., and II. * * figure 1 * ----- | 1-4, 11-15 | TECHNICAL FIELDS SEARCHED (IPC) |

The present search report has been drawn up for all claims

| Place of search | Date of completion of the search | Examiner |
|---|---|---|
| Berlin | 20 January 2014 | Chave, Julien |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 13 30 6202

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2014

| Patent document cited in search report | | Publication date | Patent family member(s) | | Publication date |
|---|---|---|---|---|---|
| EP 1603295 | A2 | 07-12-2005 | EP | 1603295 A2 | 07-12-2005 |
| | | | KR | 20050115754 A | 08-12-2005 |
| | | | US | 2005271152 A1 | 08-12-2005 |
| WO 2012168926 | A2 | 13-12-2012 | NONE | | |

EPO FORM P0459

For more details about this annex : see Official Journal of the European Patent Office, No. 12/82